# EUROPEAN PATENT APPLICATION

(11) **EP 4 806 955 A1**
(43) Date of publication of application: **16.09.2026**
(21) Application number: 24909623.1
(22) Date of filing: 26.06.2024
(51) Int. Cl.: C09C 1/48, C09C 1/54, C08L 23/22, C08L 11/00

(54) **HIGH THERMAL CONDUCTIVITY CARBON BLACK, PREPARATION METHOD THEREFOR, AND TIRE BLADDER**

(30) Priority: 25.12.2023 CN 202311792327
(71) Applicant: Jiaozuo City Hexing Chemical Industry Co., Ltd., Jiaozuo, Henan 454150 (CN)
(72) Inventor: JIANG, Zhihang, Jiaozuo, Henan 454150 (CN); YANG, Ningning, Jiaozuo, Henan 454150 (CN); JIAO, Julan, Jiaozuo, Henan 454150 (CN); SUN, Tiantian, Jiaozuo, Henan 454150 (CN); SUO, Rong, Jiaozuo, Henan 454150 (CN); LIU, Xinsheng, Jiaozuo, Henan 454150 (CN); JIA, Shuili, Jiaozuo, Henan 454150 (CN); ZHU, Licai, Jiaozuo, Henan 454150 (CN)
(74) Representative: Leotta, Antonio
(86) International application number: PCT/CN2024/101721
(87) International publication number: WO 2025/138663

(57) **Abstract**

The present disclosure relates to the technical field of carbon black materials, and in particular relates to a high thermal conductivity carbon black, a preparation method therefor, and a tire bladder. The high thermal conductivity carbon black has a thermal conductivity of 0.1462-0.2097 W/m·K; the carbon black has an average primary particle size of 25-45 nm; and the carbon black primary particles comprise carbon spheres and epitaxial carbon layers located on surfaces of the carbon spheres. The thermal conductivity of the carbon black of the present disclosure is an improvement of up to 79% relative to commonly used carbon blacks on the market; the thermal conductivity performance of carbon black is significantly improved, which facilitates improvement in the thermal conductivity of tire bladders while also retaining the service life thereof, and costs are also reduced.

## Description

### CROSS REFERENCE TO THE RELATED APPLICATIONS

The present invention claims priority to and benefit of Chinese Patent Application No. 202311792327.2 filed with the China National Intellectual Property Administration on December 25, 2023, and entitled "HIGH THERMAL CONDUCTIVITY CARBON BLACK, PREPARATION METHOD THEREFOR, AND TIRE BLADDER", which is incorporated herein by reference in entirety.

### TECHNICAL FIELD

The present invention relates to the technical field of carbon black materials, and particularly relates to a high thermal conductivity carbon black, a preparation method therefor, and a tire bladder.

### BACKGROUND ART

A tire bladder is primarily a tool for tire vulcanization, and serves as an important mold in a tire manufacturing process, acting as an inner mold of a tire mold. During a process of the tire vulcanization, the tire bladder is mainly internally charged with compressed gas, nitrogen gas, superheated water, etc., causing it to expand and support a tire rubber blank, to form internal pressure for the tire vulcanization. An exterior of a green tire is in direct contact with a steel mold. Since heat transfer performance of the steel mold is superior to that of a curing bladder, by improving the heat conductivity of the curing bladder, it can shorten vulcanization time of the green tire, thereby achieving the effects of saving energy, improving production efficiency, and reducing production costs.

Currently, in common tire bladders, conventional carbon black is employed as a reinforcing filler. This results in low thermal conductivity of the tire bladders, leading to a long vulcanization duration and a short service life of the curing bladder, and failing to meet market demands. In the prior art, materials with high thermal conductivity (such as graphene, carbon nanotubes, and fibrous fillers) are blended to partially replace the carbon black, thereby improving the thermal conductivity and heat transfer efficiency of the tire bladder. However, this introduces issues of dispersibility and costs. Therefore, how to achieve a balance between improved heat transfer performance and long service life and low costs of the curing bladder is a technical challenge in the field.

In view of this, the present invention is proposed specifically.

### SUMMARY

The present invention aims to provide a high thermal conductivity carbon black, a preparation method therefor, and a tire bladder. The carbon black of the present invention has excellent heat transfer performance, which can significantly improve the heat conductivity of the tire bladder while maintaining the service life of the tire bladder and reducing the costs.

To achieve the above objective of the present invention, in one aspect, the present invention provides a high thermal conductivity carbon black, wherein a thermal conductivity of the carbon black ranges from 0.1462 W/m·K to 0.2097 W/m·K; and
an average particle size of primary particles of the carbon black ranges from 25 nm to 45 nm; and each of the primary particles of the carbon black includes a carbon sphere and epitaxial carbon layers located on a surface of the carbon sphere.

In a specific embodiment of the present invention, the carbon black satisfies following properties:
(a) a BET specific surface area ranges from 70 m²/g to 160 m²/g;
(b) a DBP oil absorption value (number) ranges from 240 cm³/100 g to 350 cm³/100 g; and
(c) in a 2D Raman spectrum with an excitation wavelength of 532 nm, a full width at half maximum of a 2D Raman scattering peak (Δ2D) in a range of 2670-2690 cm⁻¹ ranges from 118 cm⁻¹ to 128 cm⁻¹, a ratio of a peak intensity of the 2D Raman scattering peak to a peak intensity of a G Raman scattering peak ranges from 0.32 to 0.61, and a Raman microcrystallite planar size ranges from 35 Å to 50 Å.

In a specific embodiment of the present invention, a degree of crystallinity of the carbon black ranges from 45% to 50%, such as from 47% to 50%.

In a specific embodiment of the present invention, the thermal conductivity of the carbon black ranges from 0.1541 W/m·K to 0.2097 W/m·K.

In a specific embodiment of the present invention, the carbon black is acetylene black.

In a specific embodiment of the present invention, the epitaxial carbon layers are grown in situ on the surface of the carbon sphere.

In another aspect, the present invention provides a preparation method for any one of the above-mentioned carbon blacks, including a step of:
subjecting acetylene and methane to a thermal pyrolysis reaction in a carbon-dioxide-containing and air-isolated environment to form the carbon black.

In a specific embodiment of the present invention, a flow rate ratio of the acetylene, the methane, and the carbon dioxide is 20:5:(2 to 7).

In a specific embodiment of the present invention, gas flow directions of the acetylene and the methane are opposite; and a gas flow direction of the carbon dioxide is arranged at an included angle to the gas flow directions of the acetylene and the methane. Further, the included angle ranges from 45° to 60°.

In a further aspect, the present invention provides a tire bladder, including a rubber matrix and a filler, wherein the filler includes any one of the above-mentioned carbon blacks.

Compared with the prior art, the present invention has following beneficial effects:
(1) the carbon black of the present invention can achieve an improvement of up to 79% in the thermal conductivity relative to commonly used commercially available carbon blacks, significantly improving the heat transfer performance of the carbon black, which facilitates improvement in the heat conductivity of tire bladders while maintaining the service life thereof and saving the costs; and
(2) the preparation method for the carbon black of the present invention is simple in process and suitable for large-scale production.

### BRIEF DESCRIPTION OF THE DRAWINGS

In order to more clearly illustrate technical solutions of embodiments of the present invention or the prior art, drawings that need to be used in the description of the embodiments or the prior art will be briefly introduced below. Obviously, the drawings described below are for some embodiments of the present invention. Those ordinarily skilled in the art could also obtain other drawings based on these drawings without making any inventive efforts.
FIG. 1 is a structural schematic diagram of an apparatus for preparing a high thermal conductivity carbon black provided by an embodiment the present invention;
FIG. 2 is a top view of nozzles and a furnace head provided by an embodiment of the present invention;
FIG. 3 is a transmission electron microscopy image of a carbon black prepared in Example 1 of the present invention;
FIG. 4 is a partially enlarged view of the transmission electron microscopy image of FIG. 3;
FIG. 5 is another partially enlarged view of the transmission electron microscopy image of FIG. 3;
FIG. 6 is a Raman spectrum of the carbon black prepared in Example 1 of the present invention;
FIG. 7 is a Raman spectrum of the carbon black prepared in Example 2 of the present invention;
FIG. 8 is a Raman spectrum of the carbon black prepared in Example 3 of the present invention;
FIG. 9 is a Raman spectrum of the carbon black of Comparative Example 1 of the present invention; and
FIG. 10 is a Raman spectrum of the carbon black prepared in Comparative Example 2 of the present invention.

### Reference numerals:

10-pyrolysis furnace body; 11-reaction chamber; 12-furnace head;
13-nozzle; 14-gas introduction tube; 15-discharge outlet;
131-first nozzle; and 132-second nozzle.

### DETAILED DESCRIPTION OF THE EMBODIMENTS

The technical solutions of the present invention will be clearly and completely described below in combination with drawings and specific embodiments, but those skilled in the art would understand that the embodiments described below are only some but not all embodiments of the present invention, and they are only used to illustrate the present invention but should not be regarded as limitation to the scope of the present invention. Based on the embodiments of the present invention, all other embodiments obtained by those ordinarily skilled in the art without making inventive efforts shall fall within the scope of protection of the present invention. Where the specific conditions are not specified in the embodiments, conventional conditions or conditions recommended by the manufacturer shall be followed. Reagents or instruments used without a designated manufacturer are all conventional products that are commercially available.

Carbon black can be commonly used as a reinforcing filler in the manufacturing of tire bladders. However, with the rapid popularization of radial tires, the manufacturing of high-performance tires has also imposed higher demands on the standards of the tire bladders. In order to achieve a balance between improved heat transfer performance and long service life and low costs of curing bladders, it is necessary to further improve the heat transfer performance of the carbon black while maintaining other properties.

In view of this, in one aspect, the present invention provides a high thermal conductivity carbon black, wherein a thermal conductivity of the carbon black ranges from 0.1462 W/m·K to 0.2097 W/m·K; and
primary particles of the carbon black have an average particle size ranging from 25 nm to 45 nm; and each of the primary particles of the carbon black includes a carbon sphere and epitaxial carbon layers located on a surface of the carbon sphere.

The thermal conductivity is measured using a thermal constants analyzer (Hot Disk AB). For example, in different embodiments, the thermal conductivity of the carbon black can be 0.1462 W/m·K, 0.15 W/m·K, 0.16 W/m·K, 0.17 W/m·K, 0.18 W/m·K, 0.19 W/m·K, 0.20 W/m·K, or 0.2097 W/m·K or in a range constituted by any two thereof.

The inventors discovered through research that when a BET specific surface area, a DBP absorption value, and a 2D Raman spectrum of the carbon black simultaneously meet certain requirements, the thermal conductivity of the corresponding carbon black can be significantly improved, thus meeting high requirements of high-performance tire manufacturing for tire bladders.

Theoretically, the larger the BET is, the smaller the primary particles of a material are, and the greater the number of primary particles for the same mass is, thereby enabling construction of a more developed thermal conduction network, and better thermal conduction performance. However, smaller primary particles will lead to greater intermolecular forces of conventional carbon black. This will introduce dispersion issues in downstream blending applications, resulting in problems such as local heating in downstream products. In view of this, the inventors further discovered through research that introducing the epitaxial carbon layer structure on the surface of the carbon black while applying certain etching on the surface of the carbon black, on the one hand, significantly improves dispersibility, and on the other hand, enables increased surface contact between carbon black particles and between the carbon black and other materials, thus expanding the thermal conduction network and further improving the heat conductivity.

DBP oil absorption value and 2D Raman spectrum are microstructural parameters of the carbon black. Herein, the DBP oil absorption value can characterize void volume within carbon black aggregates. Introducing new structures on the surface of the carbon black and etching the surface of the carbon black both increase the void volume inside the carbon black aggregates to some extent. That is, the DBP oil absorption value becomes larger, which also indicates a more developed chain-branch structure of the carbon black, leading to a more developed thermal conduction network and improved heat conductivity. The specific number of layers, stacking methods, etc., of the epitaxial carbon layer structure introduced into the carbon black can be reflected through the 2D Raman spectrum.

Therefore, it is necessary to precisely quantify and control ranges of various parameters, so as to allow the carbon black to achieve a superior thermal conduction network and high thermal conductivity.

In a specific embodiment of the present invention, the carbon black satisfies following properties:
(a) the BET specific surface ranges from 70 m²/g to 160 m²/g;
(b) the DBP oil absorption value ranges from 240 cm³/100 g to 350 cm³/100 g; and
(c) in a 2D Raman spectrum with an excitation wavelength of 532 nm, a full width at half maximum of a 2D Raman scattering peak (Δ2D) in a range of 2670-2690 cm⁻¹ ranges from 118 cm⁻¹ to 128 cm⁻¹, a ratio of a peak intensity of the 2D Raman scattering peak to a peak intensity of a G Raman scattering peak ranges from 0.32 to 0.61, and a Raman microcrystallite planar size ranges from 35 Å to 50 Å.

The BET specific surface area is measured according to the method in GB/T 19587-2004. For example, in different embodiments, the BET specific surface area of the carbon black can be 70 m²/g, 80 m²/g, 90 m²/g, 100 m²/g, 110 m²/g, 120 m²/g, 130 m²/g, 140 m²/g, 150 m²/g, or 160 m²/g or in a range constituted by any two thereof.

The DBP oil absorption value is determined according to the standard method in GB/T 3780.2-2017 Carbon black Part 2: Determination of oil absorption number. For example, in different embodiments, the DBP oil absorption value of the carbon black can be 240 cm³/100 g, 250 cm³/100 g, 256 cm³/100 g, 300 cm³/100 g, or 350 cm³/100 g or in a range constituted by any two thereof.

The specific testing method and testing parameters of the 2D Raman spectrum are as follows:
Using a laser Raman spectrometer, several particles of the carbon black sample to be tested are placed on a glass slide and scraped flat several times with a spatula. Test is conducted under following measurement conditions: YAG laser (excitation wavelength): 532 nm, grating (groove density): 600 gr/mm, filter: D0.6, objective lens magnification: 100×, exposure time: 150 seconds, and cumulative number of times: 2 times. Raman microcrystallite planar size (La) is measured by Raman spectroscopy. Regression analysis yields following empirical relationship: La = 43.5× (area of G-band / area of D-band), wherein La is expressed in Ångström (Å). Crystal domains of the carbon black can be characterized by La, which can indicate a degree of graphitization; and the higher the La value is, the higher the degree of graphitization is.

For example, in different embodiments, for the carbon black in a 2D Raman spectrum with the excitation wavelength of 532 nm, a peak position range of the 2D Raman scattering peak can be selected from, but is not limited to, 2670 cm⁻¹, 2675 cm⁻¹, 2680 cm⁻¹, 2685 cm⁻¹, or 2690 cm⁻¹ or a range constituted by any two thereof; the full width at half maximum corresponding to the 2D Raman scattering peak (Δ2D) can be selected from, but is not limited to, 118 cm⁻¹, 120 cm⁻¹, 122 cm⁻¹, 124 cm⁻¹, 125 cm⁻¹, 126 cm⁻¹, or 128 cm⁻¹ or a range constituted by any two thereof; the ratio I_{2D}/I_{G} of the peak intensity of the 2D Raman scattering peak (I_{2D}) to the peak intensity of the G Raman scattering peak (I_{G}), can be selected from, but is not limited to, 0.32, 0.43, 0.45, 0.50, 0.51, 0.53, 0.55, 0.57, 0.59, or 0.61 or a range constituted by any two thereof; and a Raman microcrystallite planar size of the carbon black can be selected from, but is not limited to, 35 Å, 36 Å, 38 Å, 40 Å, 42 Å, 45 Å, 48 Å, or 50 Å or a range constituted by any two thereof.

In a specific embodiment of the present invention, a degree of crystallinity of the carbon black ranges from 45% to 50%, such as from 47% to 50%. The degree of graphitization of the carbon black, which can be characterized by the degree of crystallinity, is measured from Raman spectrum as the ratio of the intensity of the G-band to the sum of the intensities of the G-band and the D-band (I_{G}/I_{G+D}). The carbon black of the present invention has a relatively high degree of graphitization, and when used as a filler in rubber, the carbon black can form the thermal conduction network in the rubber, thereby improving the heat transfer performance of the rubber by the high degree of graphitization of the carbon black.

For example, in different embodiments, the degree of crystallinity of the carbon black can be 45%, 47%, 48%, or 50% or in a range constituted by any two thereof.

In a specific embodiment of the present invention, the thermal conductivity of the carbon black ranges from 0.1541 W/m·K to 0.2097 W/m·K.

In a specific embodiment of the present invention, the carbon black is acetylene black.

In a specific embodiment of the present invention, the epitaxial carbon layers are grown in situ on the surface of the carbon sphere.

In another aspect, the present invention provides a preparation method for any one of the above-mentioned carbon blacks, including a step of:
subjecting acetylene and methane to a thermal pyrolysis reaction in a carbon-dioxide-containing and air-isolated environment to form the carbon black.

The preparation method for the carbon black in the present invention involves thermal pyrolysis of acetylene to generate a nucleation core of acetylene black, followed by growth. Simultaneously, heat generated by the thermal pyrolysis of acetylene makes methane crack for nucleation and growth, producing a certain amount of hydrogen atoms, which slows down and prevents curling and closure of carbon clusters on a surface of acetylene black, thus forming a spherical surface of acetylene black. Consequently, the epitaxial carbon layers are formed on the carbon sphere of acetylene black. Further, carbon dioxide in the reaction system reacts with high-temperature carbon generated from pyrolysis to produce a certain amount of active oxygen atoms, which have a certain etching effect on the surface of acetylene black, hindering or cutting off formation of perfect spherical surfaces on the surface of acetylene black carbon sphere and promoting formation of the epitaxial carbon layers on the acetylene black carbon sphere.

In a specific embodiment of the present invention, a flow rate ratio of acetylene, methane, and carbon dioxide is 20:5:(2 to 7).

For example, in different embodiments, the flow rate ratio of acetylene, methane, and carbon dioxide can be 20:5:2, 20:5:3, 20:5:4, 20:5:6, or 20:5:7 or in a range constituted by any two thereof. By maintaining the flow rate ratio of acetylene, methane, and carbon dioxide in a reaction environment within the above range, corresponding carbon black structure is obtained.

In a specific embodiment of the present invention, gas flow directions of acetylene and methane are opposite, so as to facilitate uniform mixing of acetylene and methane; and a gas flow direction of carbon dioxide is arranged at an included angle to the gas flow directions of acetylene and methane. Further, the included angle ranges from 45° to 60°.

By adjusting the gas flow directions of carbon dioxide, acetylene, and methane to meet the above conditions, acetylene black generated from the pyrolysis of acetylene and methane can pass rapidly through a reaction zone, avoiding presence of a recirculation zone that would terminate the reaction, further promoting the formation of the epitaxial carbon layers on the acetylene black carbon spheres. For example, in different embodiments, the included angle can be 45°, 48°, 50°, 52°, 55°, 58°, or 60° or in a range constituted by any two thereof.

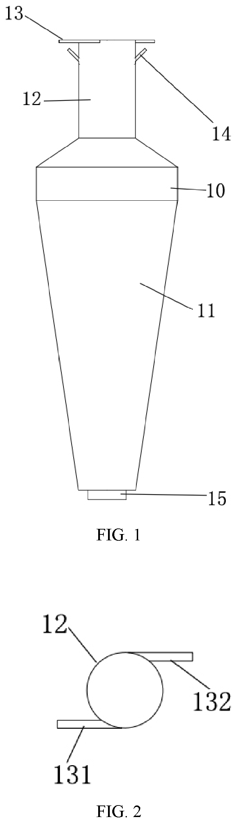

In a further aspect, the present invention provides an apparatus for implementing any one of the above-mentioned preparation methods for carbon blacks, as shown in FIG. 1, including: a pyrolysis furnace body 10, wherein a reaction chamber 11 is formed inside for carrying out a thermal pyrolysis reaction. Herein, a chamber structure of the reaction chamber 11 is adaptable to a structure of the pyrolysis furnace body 10.

The pyrolysis furnace body 10 is provided with two nozzles 13 communicating with the reaction chamber 11 and configured to introduce gas into the reaction chamber 11. Herein, the two nozzles 13 can extend into the reaction chamber 11, so as to deliver gas into the reaction chamber 11, thus ensuring smooth progress of the thermal pyrolysis reaction.

The pyrolysis furnace body 10 is provided with a furnace head 12 corresponding to the two nozzles 13. The furnace head 12 is provided with at least one gas introduction tube 14 communicating with the reaction chamber 11 and configured to introduce carbon dioxide into the reaction chamber 11.

As shown in FIG. 2, the two nozzles 13 include a first nozzle 131 and a second nozzle 132. The first nozzle 131 is configured to introduce air or methane into the reaction chamber 11, and the second nozzle 132 is configured to introduce acetylene into the reaction chamber 11. The first nozzle 131 and the second nozzle 132 are provided on two opposite sides of the furnace head 12, close to one end of the furnace head 12, and central axes of the first nozzle 131 and the second nozzle 132 are perpendicular to a central axis of the furnace head 12. Jet directions of the first nozzle 131 and the second nozzle 132 are opposite.

In practical operation, air can be first introduced through the first nozzle 131, and acetylene gas can be introduced through the second nozzle 132 for combustion, raising temperature up to a certain temperature (e.g., 850 °C) to preheat the pyrolysis furnace. Then, after air supply is cut off for a period of time, methane gas is supplied through the first nozzle 131, and carbon dioxide is introduced through the gas introduction tube 14 to initiate the thermal pyrolysis reaction. The carbon black is collected after cooling.

In a specific embodiment of the present invention, two gas introduction tubes 14 are included, and two gas introduction tubes 14 are provided opposite to each other on two sides of the furnace head 12.

In practical operation, the pyrolysis furnace body 10 can be provided with conventional heating components and temperature control components.

In a specific embodiment of the present invention, a central axis of the gas introduction tube 14 is set at an included angle to the central axis of the furnace head 12. Further, the included angle ranges from 30° to 45°. In subsequent embodiments, unless otherwise specified, the included angle is 40°, but it is not limited thereto.

By adjusting the included angle between the central axis of the gas introduction tube 14 and the central axis of the furnace head 12, the acetylene black generated from the pyrolysis of acetylene and methane can quickly pass through the reaction zone, thus avoiding long-term presence of the recirculation zone that would terminate the reaction, and further promoting the formation of the epitaxial carbon layers on the acetylene black carbon spheres.

In a specific embodiment of the present invention, the pyrolysis furnace body 10 further includes a discharge outlet 15. The discharge outlet 15 is provided at one end of the reaction chamber 11 away from the furnace head 12. Upon completion of the reaction, the carbon black leaves the reaction chamber 11 through the discharge outlet 15.

In a further aspect, the present invention provides a tire bladder, including a rubber matrix and a filler, wherein the filler includes any one of the above-mentioned carbon blacks.

Herein, as a filler for the tire bladder, the carbon black can completely or partially replace original fillers in the tire bladder. That is, the carbon black can be used as the sole filler or in combination with other fillers, including but not limited to any one or more of commercially available acetylene carbon blacks, carbon black N220, carbon black N330, and carbon black N660.

In a specific embodiment of the present invention, the amount of carbon black in the present invention ranges from 25% to 31% of a mass of the rubber matrix.

In a specific embodiment of the present invention, the rubber matrix includes, but is not limited to, butyl rubber.

The tire bladder of the present invention further includes other conventional additives, including but not limited to softeners, vulcanizing agents, activators, processing aids, etc. Herein, the softeners include, but are not limited to, castor oil; the vulcanizing agents include, but are not limited to, vulcanizing resins; the activators include, but are not limited to, chloroprene rubber and zinc oxide; and the processing aids include, but are not limited to, stearic acid.

In addition, the tire bladder can further include additives such as active substances and dispersants.

### Examples 1 to 3

Examples 1 to 3 provide the preparation methods for the high thermal conductivity carbon black, using the apparatus shown in FIG. 1 for preparation, including following steps.
(1) The acetylene gas at a flow rate of 10 Nm³/h and air at a flow rate of 60 Nm³/h were introduced into the pyrolysis furnace body 10 for combustion, raising temperature up to 850 °C to preheat the pyrolysis furnace body 10. Herein, air was supplied through the first nozzle 131, and acetylene was supplied through the second nozzle 132.
(2) Acetylene continued to be supplied through the second nozzle 132. After air supply was cut off for a period of time to ensure that the pyrolysis furnace was isolated from air, methane gas was supplied through the first nozzle 131, and carbon dioxide was supplied through the gas introduction tube 14. After the thermal pyrolysis reaction in the reaction chamber 11, resulting carbon black was collected after cooling.

In the preparation methods of Examples 1 to 3, the flow rates of acetylene gas, methane gas, and carbon dioxide in step (2) are listed in Table 1.

**Table 1 Flow Rate Information**

| No. | Acetylene (Nm³/h) | Methane (Nm³/h) | Carbon Dioxide (Nm³/h) |
|---|---|---|---|
| Example 1 | 20 | 5 | 2 |
| Example 2 | 20 | 5 | 5 |
| Example 3 | 20 | 5 | 7 |

### Example 4

The present example provides a tire bladder. Based on parts by weight, the amounts of various raw materials were as follows: 100 parts of butyl rubber, 8 parts of castor oil, 30 parts of carbon black, 9 parts of vulcanizing resin, 4 parts of chloroprene rubber, 6 parts of zinc oxide, and 2 parts of stearic acid, respectively.

The present example further provides a preparation method for the tire bladder, specifically including following steps:
(1) batching: various raw materials were weighted separately, where based on parts by weight, the amounts of the various raw materials were as follows: 100 parts of butyl rubber, 8 parts of castor oil, 30 parts of carbon black, 9 parts of vulcanizing resin, 4 parts of chloroprene rubber, 6 parts of zinc oxide, and 2 parts of stearic acid;
(2) internal mixing: butyl rubber, chloroprene rubber, stearic acid, carbon black, and castor oil were sequentially added to an internal mixer for mixing for 4 min;
(3) after mixing, a first-stage batch was discharged at a discharge temperature of 150 °C, then filtered and left to stand for 24 h;
(4) after being left, the first-stage batch was mixed with vulcanizing resin and zinc oxide to undergo a second-stage mixing for 7 min;
(5) after the mixing, the second-stage batch was discharged at a discharge temperature of 120 °C and left to stand for 24 h;
(6) extrusion of rubber strips: the second-stage batch was extruded into rubber strips using a cold-feed extruder, where a temperature of an extruded rubber strip was controlled at 130 °C; and
(7) bladder molding: the extruded rubber strips were prepared into tire bladders using an injection-type curing press (vulcanizer), wherein a curing temperature was 200 °C, and a mold-clamping pressure was 20 Pa during the curing.

The carbon blacks in various tire bladders were the carbon blacks obtained in Examples 1 to 3, respectively, and corresponding tire bladders were designated as Example 4-1, Example 4-2, and Example 4-3, respectively.

### Comparative Example 1

Comparative Example 1 provides a commercially available SP carbon black.

Comparative Example 1 further provides a tire bladder, prepared by the method of Example 4, except that the carbon black in Example 4 was replaced with an equal weight of the commercially available SP carbon black.

### Comparative Example 2

Comparative Example 2 provides a carbon black, prepared by the method of Example 1, except that carbon dioxide was not supplied in step (2).

### Experimental Example 1

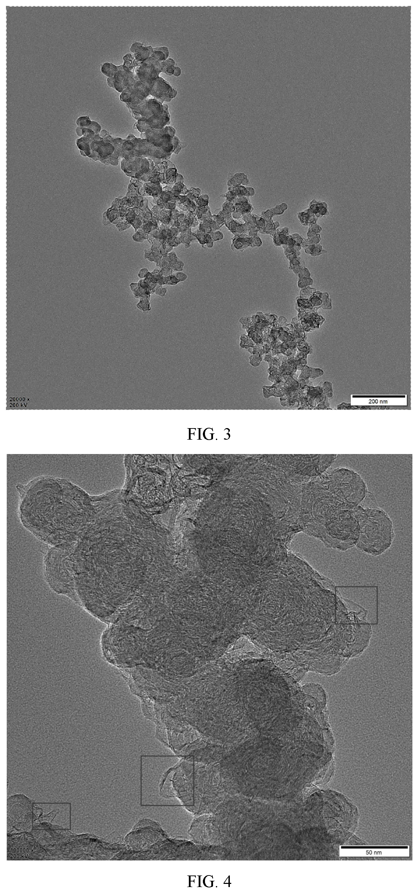

FIG. 3 to FIG. 5 are transmission electron microscopy images of the carbon black prepared according to Example 1 of the present invention. As can be seen from images, the primary particles of the carbon black of the present invention are substantially spherical, and each primary particle includes a carbon sphere and the epitaxial carbon layers on the carbon sphere. In addition, the epitaxial carbon layers have clear lattice fringes, exhibiting characteristics of graphene or graphitic carbon layer, and possessing good heat conductivity. Since the surfaces of the carbon spheres of the primary particles have the epitaxial carbon layers, point-to-surface contact can be formed between the primary particles of the carbon black, thereby improving the thermal conductivity, showing a significant advantage over the point-to-point contact of conventional carbon black.

In addition, the average particle sizes (average particle size of 100 primary particles observed by transmission electron microscopy) of the primary particles of the carbon blacks in different examples and comparative examples are listed in the table below. As can be seen from Table 2, the average particle size of the primary particles of the carbon black of the present invention ranges from 25 nm to 45 nm.

**Table 2 Morphology Information of Carbon Blacks in Different Examples and Comparative Examples**

| No. | Average Particle Size of Primary Particles (nm) |
|---|---|
| Example 1 | 45 |
| Example 2 | 35 |
| Example 3 | 25 |
| Comparative Example 1 | 40 |
| Comparative Example 2 | 45 |

### Experimental Example 2

Raman spectrum test was performed on the carbon blacks in different examples and comparative examples. The specific testing method was as follows: using a laser Raman spectrometer, several particles of carbon black sample to be tested were placed on the glass slide and scraped flat several times with the spatula. The test was conducted under following measurement conditions: YAG laser (excitation wavelength): 532 nm, grating: 600 gr/mm, filter: D0.6, objective lens magnification: 100×, exposure time: 150 s, and cumulative number of times: 2 times.

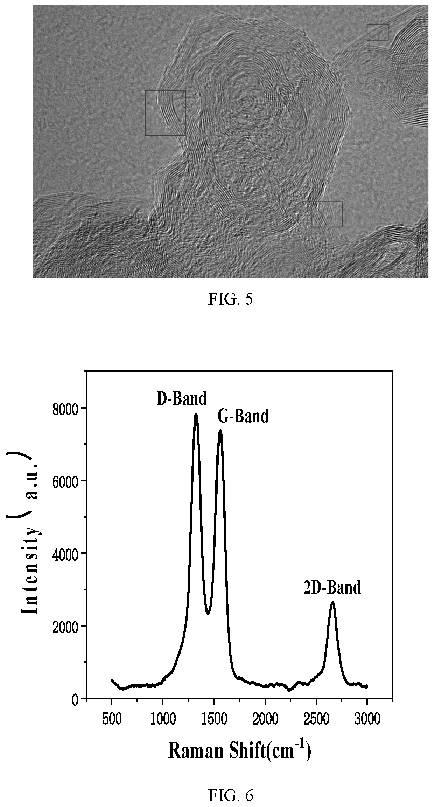

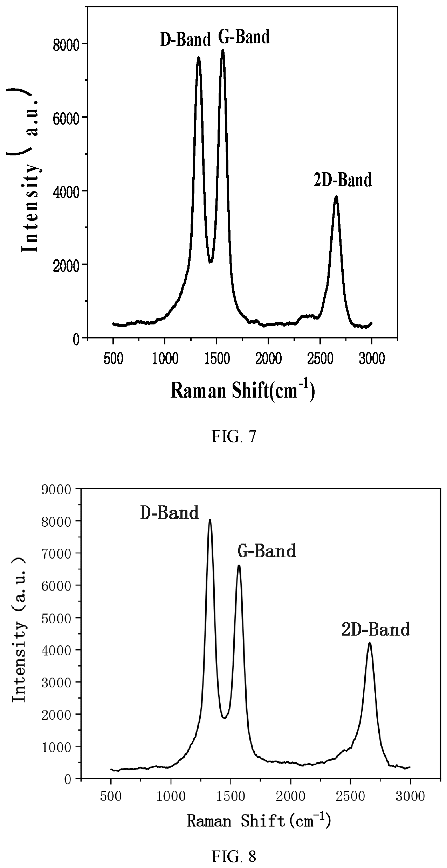

FIG. 6 to FIG. 8 respectively show the Raman spectra of the carbon blacks prepared in Examples 1 to 3 of the present invention. For the carbon blacks prepared in Examples 1 to 3, the full width at half maximum of the 2D Raman scattering peak (Δ2D) in the range of 2670-2690 cm⁻¹ was 125, 118, and 128 cm⁻¹, respectively. Herein, the 2D Raman scattering peak was a symmetrical sharp single peak, and a peak position of the 2D Raman scattering peak was shifted to the left compared with the peak position of typical bulk graphite (approximately 2710 cm⁻¹). It is precisely a characteristic peak of the carbon layers with graphene structure, which is different from the bulk graphite. This also confirms the presence of the epitaxial carbon layers in the carbon black of the present invention, which is also consistent with TEM results.

In addition, the 2D Raman scattering peak shows a relatively strong correlation with structure and stacking method of graphene layers. Generally, the fewer the number of the graphene layers is, the sharper and the more symmetrical the 2D Raman scattering peak is. The 2D Raman scattering peak of the carbon black prepared in the present invention exhibited symmetry, and the ratio (I_{2D}/I_{G}) of the peak intensity of the 2D Raman scattering peak to the peak intensity of the G Raman scattering peak was 0.32, 0.51, and 0.61, respectively. The I_{2D}/I_{G} of conventional high-quality monolayer graphene is 2. As the ratio decreases, the number of graphene layers increases, while excluding the contribution of the Raman scattering of graphite layers on the surfaces of the carbon spheres of the carbon black to the G peak in the Raman spectrum of the carbon black, the I_{2D}/I_{G} of the carbon black prepared in the present invention ranged from 0.32 to 0.61, indicating a small number of epitaxial carbon layers in the carbon black, possessing a graphene-like structure, which is also consistent with the TEM results. When the I_{2D}/I_{G} of the prepared carbon black ranged from 0.32 to 0.61, the epitaxial carbon layers of the carbon black can exhibit unique flexibility of graphene sheets and can improve surface contact between the epitaxial carbon layers and between the epitaxial carbon layers and the carbon spheres of the carbon black. Therefore, the carbon black can possess excellent heat conductivity.

The La of the carbon blacks prepared in Examples 1 to 3 was 42 Å, 50 Å, and 35 Å, respectively, indicating that the carbon blacks prepared in the present invention have a relatively high degree of graphitization.

Moreover, the degree of graphitization of the carbon black is further characterized by degree of crystallinity. As measured by Raman spectroscopy, the degree of crystallinity of the carbon blacks prepared in specific Examples 1 to 3 was 47%, 50%, and 45%, respectively, further demonstrating that the carbon black prepared in the present invention can achieve a high degree of graphitization. Therefore, when used as a filler in the rubber, it can form a thermal conduction network in the rubber, and because of its high degree of graphitization, it can improve the heat transfer performance of the rubber.

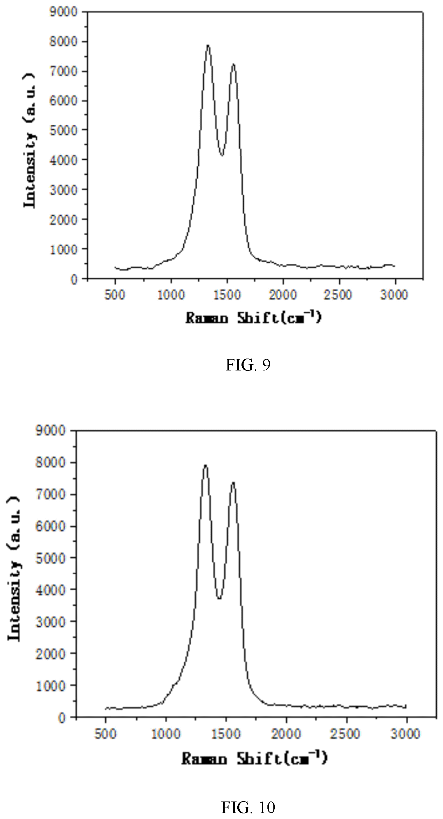

FIG. 9 and FIG. 10 are the Raman spectra of the carbon blacks in Comparative Examples 1 and 2 of the present invention, respectively. As can be seen from the figures, there are no 2D Raman scattering peaks in the Raman spectra of Comparative Example 1 and Comparative Example 2.

Characteristic information of the carbon blacks from different examples and comparative examples of the present invention obtained according to the Raman spectra is listed in Table 3.

**Table 3 Characteristic Information in Different Examples and Comparative Examples**

| No. | Peak Position of 2D Raman Scattering Peak (cm⁻¹) | Full Width at Half Maximum of 2D Raman Scattering Peak (cm⁻¹) | I_{2D}/I_{G} | La (Å) | Degree of Crystallinity I_{G}/I_{G+D} |
|---|---|---|---|---|---|
| Example 1 | 2685 | 125 | 0.32 | 42 | 47% |
| Example 2 | 2670 | 118 | 0.51 | 50 | 50% |
| Example 3 | 2690 | 128 | 0.61 | 35 | 45% |
| Comparative Example 1 | / | / | / | 14 | 24% |
| Comparative Example 2 | / | / | / | 30 | 38% |

### Experimental Example 3

The BET specific surface area of the carbon blacks in different examples and comparative examples was tested according to GB/T 19587-2004. The thermal conductivity of the carbon blacks in different examples and comparative examples was tested using the thermal constants analyzer from Hot Disk. The DBP oil absorption value of the carbon blacks in different examples and comparative examples was determined using the standard method in GB/T 3780.2-2017 Carbon black Part 2: Determination of oil absorption number. Specific test results are listed in Table 4.

**Table 4 Test Results of BET Specific Surface Area, Thermal Conductivity, and DBP Oil Absorption Value in Different Examples and Comparative Examples**

| No. | BET Specific Surface Area (m²/g) | Thermal Conductivity (W/m·K) | Diffusion Coefficient (mm²/s) | DBP Oil Absorption Value (cm³/100 g) |
|---|---|---|---|---|
| Example 1 | 70 | 0.1462 | 0.166 | 240 |
| Example 2 | 95 | 0.2097 | 0.221 | 256 |
| Example 3 | 160 | 0.1541 | 0.192 | 350 |
| Comparative Example 1 | 60 | 0.1173 | 0.145 | 230 |
| Comparative Example 2 | 63 | 0.1358 | 0.1547 | 235 |

As can be seen from Table 4, the carbon black of the present invention has a relatively high BET specific surface area, indicating a well-developed porous structure therein, which increases the number of contact points with the rubber matrix in the rubber, thus enabling to fully utilize the heat conductivity of the carbon black. The thermal conductivity of the carbon black of the present invention is relatively high, with an improvement of up to 79% relative to that of commonly used commercially available carbon blacks. The void volume within carbon black aggregates is characterized by the DBP oil absorption value. The carbon black of the present invention has a relatively high DBP oil absorption value, indicating a well-developed chain-branch structure of the carbon black of the present invention, which can form a well-developed thermal conduction network.

The thermal conductivity of the tire bladders in Example 4 and Comparative Examples 1 and 2 was further measured using the thermal constants analyzer from Hot Disk. Specific results are listed in Table 5.

**Table 5 Thermal Conductivity of Different Tire Bladders**

| Test Item | Example 4-1 | Example 4-2 | Example 4-3 | Comparative Example 1 | Comparative Example 2 |
|---|---|---|---|---|---|
| Thermal conductivity (W/m·K) | 0.3386 | 0.3497 | 0.3412 | 0.2583 | 0.3147 |

As can be seen from the table above, compared with the thermal conductivity of ordinary tire bladders, the thermal conductivity of the tire bladders of the present invention is significantly improved, further demonstrating that the carbon black of the present invention possesses excellent heat conductivity and can significantly improve the heat conductivity of the rubber.

In addition, compared with ordinary tire bladders, the tire bladders of the present invention are achieved only by replacing the conventional carbon black. This significantly reduces the costs while simultaneously improving the performance and service life of the tire bladders, compared with adding expensive high-thermal-conductivity materials such as graphene and carbon nanotubes.

Finally, it should be noted that the above various embodiments are only used to illustrate the technical solutions of the present invention, rather than limiting the present invention. Although the present invention has been described in detail with reference to the above various embodiments, those ordinarily skilled in the art should understand that modifications can be made to the technical solutions described in the above-mentioned various embodiments, or equivalent substitutions can be made to some or all of the technical features thereof. However, these modifications or substitutions do not make the essence of the corresponding technical solutions deviate from the scope of the technical solutions of various embodiments of the present invention.

### INDUSTRIAL APPLICABILITY

The carbon black of the present invention has excellent heat transfer performance, with an improvement of up to 79% relative to commonly used commercially available carbon blacks. This facilitates the improvement in the heat conductivity of the tire bladders while also maintaining the service life thereof and saving the costs, showing promising prospects for industrial applications.

## Claims

1. A high thermal conductivity carbon black, **characterized in that** a thermal conductivity of the carbon black ranges from 0.1462 W/m·K to 0.2097 W/m·K, and
an average particle size of primary particles of the carbon black ranges from 25 nm to 45 nm; and each of the primary particles of the carbon black comprises a carbon sphere and epitaxial carbon layers located on a surface of the carbon sphere.

2. The high thermal conductivity carbon black according to claim 1, **characterized in that** the carbon black satisfies following properties:
(a) a BET specific surface ranges from 70 m²/g to 160 m²/g;
(b) a DBP oil absorption value ranges from 240 cm³/100 g to 350 cm³/100 g; and
(c) in a 2D Raman spectrum with an excitation wavelength of 532 nm, a full width at half maximum of a 2D Raman scattering peak (Δ2D) in a range of 2670-2690 cm⁻¹ ranges from 118 cm⁻¹ to 128 cm⁻¹, a ratio of a peak intensity of the 2D Raman scattering peak to a peak intensity of a G Raman scattering peak ranges from 0.32 to 0.61, and a Raman microcrystallite planar size ranges from 35 Å to 50 Å.

3. The high thermal conductivity carbon black according to claim 1 or 2, **characterized in that** a degree of crystallinity of the carbon black ranges from 45% to 50%; and
preferably, the degree of crystallinity of the carbon black ranges from 47% to 50%.

4. The high thermal conductivity carbon black according to any one of claims 1 to 3, **characterized in that** the thermal conductivity of the carbon black ranges from 0.1541 W/m·K to 0.2097 W/m·K.

5. The high thermal conductivity carbon black according to any one of claims 1 to 4, **characterized in that** the carbon black is acetylene black.

6. The high thermal conductivity carbon black according to any one of claims 1 to 5, **characterized in that** the epitaxial carbon layers are grown in situ on the surface of the carbon sphere.

7. A preparation method for the high thermal conductivity carbon black according to any one of claims 1 to 6, **characterized by** comprising a step of:
subjecting acetylene and methane to a thermal pyrolysis reaction in a carbon-dioxide-containing and air-isolated environment to form the carbon black.

8. The preparation method according to claim 7, **characterized in that** a flow rate ratio of the acetylene, the methane, and the carbon dioxide is 20:5:(2 to 7).

9. The preparation method according to claim 7 or 8, **characterized in that** gas flow directions of the acetylene and the methane are opposite; and a gas flow direction of the carbon dioxide is arranged at an included angle to the gas flow directions of the acetylene and the methane; and
preferably, the included angle ranges from 45° to 60°.

10. A tire bladder, **characterized by** comprising a rubber matrix and a filler, wherein the filler comprises the carbon black according to any one of claims 1 to 6 or the carbon black prepared by the preparation method according to any one of claims 7 to 9.
